# EUROPEAN PATENT APPLICATION

(11) **EP 1 104 157 A2**
(43) Date of publication of application: **30.05.2001**
(21) Application number: 00480091.8
(22) Date of filing: 10.10.2000
(51) Int. Cl.: H04M 7/00, H04L 12/66, H04M 3/493

(54) **Phone system with multiple capabilities for establishing telephone calls using the internet network**

(30) Priority: 25.11.1999 EP 99480117
(71) Applicant: INTERNATIONAL BUSINESS MACHINES CORPORATION, Armonk, NY 10504 (US)
(72) Inventor: Le Pennec, JFrançois, 06100 Nice (FR); Benayoun, Alain, 06800 Cagnes-sur-Mer (FR); Michel, Patrick, 06610 La Gaude (FR)
(74) Representative: Etorre, Yves Nicolas

(57) **Abstract**

Telephone system using the Internet network (10) comprising at least a switched telephone network (12 or 16) for interconnecting a plurality of users provided each with a telephone set (20, 22), the switched telephone network(s) being attached to the Internet networ (10). Such a system comprises a phone server (24) accessible in the Internet network including a directory for storing the phone numbers associated with the plurality of users and other facilities such as voice mail and answering equipment or rerouting inforuation. The number dialed by a user wanting to send a phone call comprises a first part relating to the phone server identification so that the phone call is forwarded to the phone server (24) whereas the second part is a dial number either for identifying a remote user or for requesting information from the phone server (24).

## Description

### Technical field

The present invention relates to mixed voice-data communication systems wherein voice calls are generated from user telephone sets and relates in particular to a phone system with multiple capabilities using the Internet network.

### Background

Today, PBXs provide sophisticated call management solutions that improve the way business interfaces with their customers, reduce costs and improve productivity through more effective utilization of the allocated resources. For this, the advanced features being used are Automatic Call Distribution (ACD), Automated attendant (AA), Voice Mail and Least Cost Routing (LCR).

The Automatic Call Distribution (ACD) provides additional powerful and flexible call handling options for small and medium size businesses which were previously only available on larger and more expensive systems. Such options are improved call management and customer service, increased staff productivity or powerful and flexible feature set.

The Automated Attendant feature (AA) gives the needed flexibility for the competitive edge in business. It provides a very efficient method for rapidly processing a large number of calls to improve both productivity and customer services. It can be used as the primary answering point or as an overflow point with the existing reception operations. The characteristics of such a feature are improved customer service and productivity, rapid call processing mode and single digital dialing plan.

Voice Mail has become increasingly familiar as a facility where staff own personal greetings are recorded and callers can leave a message. It provides integrated digital voice mail, improved external communications, increased productivity and reduced overheads, and advanced features without the price tag like audio text, automated attendant, two-way recording or external notification.

Least Cost Routing (LCR) is a mechanism designed to save money on local, national or international calls as well as calls to mobiles. LCR allows the users to connect to different communication companies depending on the destination of the call, time of day and desired quality of call. LCR is transparent to the user. It auto-authenticates with the PBX system and converts dial shortcuts, dial prefixes and counting exit codes appropriately. LCR works by rerouting the calls via a box that attaches the user phone. The user can therefore keep his existing telephone number, can dial normally and receive exactly the same high quality service with the benefit of a reduced communication cost.

But with the ACD, AA, Voice Mail and LCR features, everything is centralized in a PBX which limits the use in home or small office. Furthermore, there is no way for a user to reconfigure its own configuration from any remote location and only enterprise solutions are provided for security and technical reasons. Thus, voice mails are registered on the PBX and must be accessed therein, call rerouting must first enter the PBX and the overall call cost can become very important due to this tandem calling method.

### Summary of the invention

Accordingly, the object of the invention is to provide a system giving to a phone user the capability to dial over the Internet network integrating a lot of features that are not accessible when a classical phone system is used.

The invention relates therefore to a phone system using the Internet network and comprising at least a switched telephone network attached to the Internet network for interconnecting a plurality of users provided each with a telephone set. Such a system comprises a phone server accessible in the Internet network including a directory for storing the phone numbers associated with the plurality of users and forwarding means in for forwarding to the phone server any phone call from one of the plurality of users.

### Brief description of the drawings

The above and other objects, features and advantages of the invention will be better understood by reading the following more particular description of the invention in conjunction with the accompanying drawings wherein :
- Fig. 1 represents schematically the Internet network with a phone server according to the invention to which are attached two PSTNs including each a telephone set and wherein the communication between the two telephone sets is established by using the phone server.
- Fig. 2 is a block-diagram representing the various components of an intelligent user phone equipment which can be used in conjunction with a phone user according to the invention.
- Fig. 3 is a flow chart representing all the possible steps which can be carried out when a phone call is forwarded from a user phone equipment to the phone server according to the invention.

### Detailed description of the invention

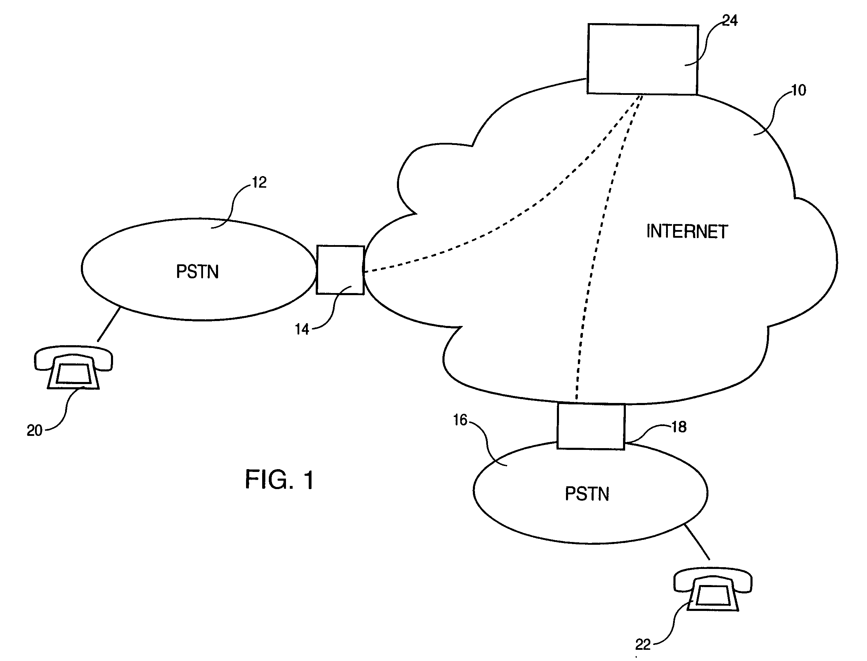

A system implementing the invention as illustrated in Fig. 1 comprises an Internet network 10 to which are attached a first Public Switched Telephone Network (PSTN) 12 by the intermediary of a first remote access server 14 and a second PSTN 16 by the intermediary of a second remote access server 18. Each PSTN is connected to a plurality of users capable of communicating with the other users through the PSTN. It is assumed that, in Fig. 1, a phone user 20 connected to PSTN 12 wants to call another phone user 22 connected to PSTN 16. Note that each PSTN could be replaced by any other switched telephone network. According to the principle of the invention, a phone call from phone user 20 to phone user 22 is forwarded to a phone server 24 in Internet network 10 before being routed to phone user 22 by means of remote access server 18 and PSTN 16.

It must be noted that the phone users communicating together could be connected to the same PSTN 12 or 16. In such a case, the Internet network is of course not required. But, it is admitted here that, even if a phone communication could be established without using the phone server (the two phone users are connected to the same PSTN), any phone call from a phone user 20 or 22 will be forwarded to phone server 24. For this, it is considered hereafter that the user dials a number comprising a first part relating to the phone server identification. Such an identification can be composed of one or two decimal digits. It will be recognized by the CX to which is connected the user in the switched telephone network. The CX will forward the phone call to the remote access server 14 (or 18) attaching the switched telephone network 12 (or 16) to the Internet network 10. The other part of the dial number is either the phone number of another user, or a specific number used for requesting information to the phone server as described hereafter. Note that the first part of the phone call used for identifying the phone server as destination of the phone call can be concatenated to the second part used as a dial number or can be an independent signal sent ahead of the dial number by the telephone set.

To fulfil a number of services which may be requested by the users, the phone server is provided with the following facilities :
- A main directory where phone numbers, names addresses and personal information of the user are stored. This information may be manually stored or taken for directory lookup databases available on the Internet network. As the various databases do not have the same format, a cut and paste function is provided to select the fields given by the Internet server in order to put them in the corresponding field of the local or main directory depending from where the request is started.
- A registered card directory with specific calling mode and access number. A password may be either protected and should be reentered, or included or generated using another sequence of keys. When a user calls, he just has to give the name or first letters, or the phone number or a code to see on the screen the various calling methods that are allowed : standard PSTN, VoIP with various compression rates and qualities, use of calling cards.
- A cost/route information which includes the necessary information to get the right cost using the least cost routing. The cost/route information is the main database which establishes a link to the carriers Internet servers or is updated by them thanks to email messages. A server administrator updates the tariffs for all calling modes but the preferred embodiment is to have an automatic loading of cost/route information using a standard template from carriers to dial servers.
- A voice mail and answering equipment for offering specific messages depending on the caller information. The identification may be based on recognition of the caller number or thanks to additional dial tones. This allows to give a message to someone specifically. The message may be registered from the telephone set, from any other telephone set calling this one with a specific code or may be registered in the server that will update the telephone set. The server may receive just an email that he will convert into voice or a voice file.
- Calling/billing statistics. With this service, each user may know its own communication bill. The bills can also be grouped to build a total bill for a set of users. In the preferred embodiment, the carriers which were used update the phone server billing dial service set by the user, which allows to provide the actual billing for each user. This billing information may be certified, authenticated with non-repudiation in order to be taken as a real bill. It may avoid to send paper billing which is costly. The user can see this information on its telephone set and perform more complex functions such as manipulate data to build statistics on the phone server.
- Rerouting information used to reach a user. This information can be used in conjunction with a message on the answering equipment. Either a rerouting can be performed if the call comes from the Internet network or the phone server can itself perform the rerouting. The best way consists in giving the user phone number that is defined for him in the phone server. This number can be used as a call routing platform that will reach the normal telephone set when nothing special is defined or will call the stored number that corresponds to the current phone of the user. The user may easily change this number through Internet or by calling the server when he is moving from one place to another by changing the telephone set being used without requiring to inform other people.

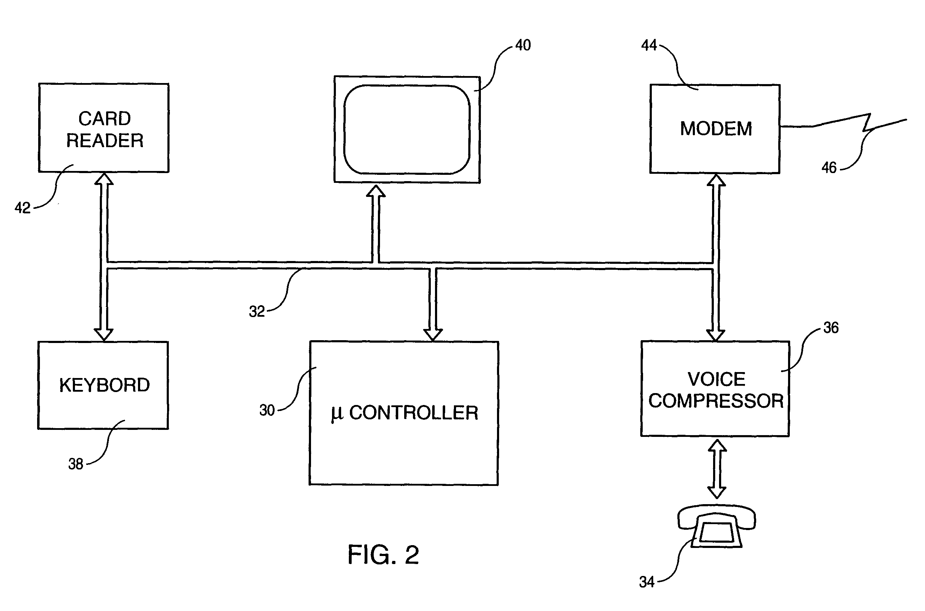

According to a preferred embodiment of the invention, the user can be provided with an intelligent telephone set as illustrated in Fig. 2. Such a telephone set is composed of a microcontroller 30 which controls the telephone set components and is provided with a memory for storing information about the facilities offered to the user. The other components connected to microcontroller 30 by a bus 32 are a handset 34 connected to bus 32 by the intermediary of a voice compressor 36, a keyboard 38 for dialing the phone numbers and inputting data, a display 40 on which the calling information or the phone server information can be displayed, a credit/phone card reader 42 for installing alternate carrier calling modes and which can be used for secure transactions over the Internet network, and an integrated modem 44 for interfacing the switched telephone network with a line 46.

Such an intelligent telephone equipment can be provided with facilities similar to the phone server facilities. Thus, it will be possible for the user to get information such as the phone numbers of other users without calling the user. This way is faster and easier than using the phone server and is an alternative way to proceed when the phone server is unavailable. But, it must be only a backup solution inasmuch as the information stored in the user phone equipment cannot be complete and up to date. As a matter of fact, all the tariff information can be gathered only by the phone server and it would be too long and costly if the user phone equipment does such a gathering. Also, it is possible to consult all the public directories on the phone server through the Internet network, whereas the user phone equipment can only access locally its own directory. All the information stored in the user equipment is updated on request of the user or can be updated on a periodic basis by the phone server.

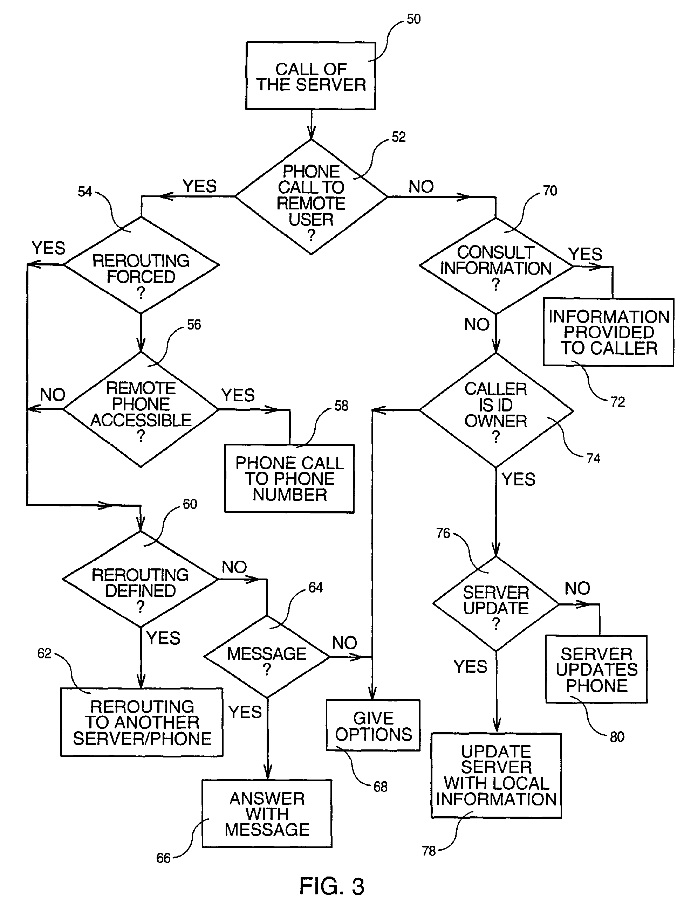

The alternate possibilities resulting from a call to the phone server are now described in reference to the flow chart of Fig. 3. When a call of the server is made (step 50), the question is whether it is a phone call to a remote user or not (step 52). As already mentioned, a call to the phone server is defined by a first field identifying the server in the number dialed by the user, and the call to a remote user is defined in the remaining part of the dial number.

If the call is to a remote user, it is then determined whether there is a rerouting forced (step 54). The forcing is set by the user who doesn't want its normal phone to be rung. If not, it is determined whether the remote phone is accessible (step 56) before forwarding the phone call to the user phone set (step 58) if accessible.

If there is a rerouting forced or if the remote phone is not accessible, it is determined whether this rerouting is defined (step 60). If so, a rerouting is performed to another server or phone (step 62) according to the information that has been stored in the phone server. If the rerouting has not been defined, it is checked whether there is a message being registered (step 64). If so, the answering equipment of the phone server communicates the message to the user (step 66). If there is no registered message, the phone server gives alternate options (step 68) which can be consulting the user agenda or reaching other people such as family, manager, or secretary.

Returning to the beginning of the flow chart, when the call is not for a remote user, this means that the second part of the dial number defines a request to the phone server. First, it is determined whether it is a request to consult information stored in the phone server (step 70). If so, the requested information is provided to the phone caller (step 72). If it is not the case, it is determined whether the caller is really the owner of the identification number provided to the phone server (step 74). If not, the phone server provides alternate options as previously (step 68). If the caller is also the ID owner or use the owner ID code which is a multitone sequence such as the tone sequence generated to reach an answering machine, it is checked whether the request relates to an updating of the phone server (step 76). If it is the case, a procedure of updating the phone server with information from the user phone equipment is started (step 78). If not, this means that the call is used to request updating information from the phone server (step 80). Note that this last step can be performed only when the user phone equipment is an intelligent equipment illustrated in Fig. 2.

## Claims

1. Telephone system using the Internet network (10) comprising at least a switched telephone network (12 or 16) for interconnecting a plurality of users provided each with a telephone set (20, 22), said switched telephone network(s) being attached to said Internet network ;
said system being characterized in that it comprises a phone server (24) accessible in said Internet network including a directory for storing the phone numbers associated with said plurality of users and forwarding means for forwarding to said phone server any phone call from one of said plurality of users.

2. Telephone system according to claim 1, wherein each of said switched telephone network(s) (12 or 16) is attached to said Internet network (10) by a remote access server (14 or 18).

3. Telephone system according to claim 2, wherein at least one of said switched telephone network(s) (12 or 16) is a Public Switched Telephone Network (PSTN).

4. Telephone system according to claim 1, 2 or 3, wherein said forwarding means comprise an identification signal sent ahead of said phone call, said identification signal being used for identifying said phone server (24) as destination of said phone call.

5. Telephone system according to claim 1, 2 or 3, wherein said forwarding means comprise a first part of the number composed by the user relating to the phone server identification whereas the second part of said number is a dial number either for identifying a remote user or for requesting information from said phone server (24).

6. Telephone system according to any one of the preceding claims, wherein said phone server (24) further includes a cost/route information for using the least cost routing and determining the right cost when using said least cost routing.

7. Telephone system according to claim 6, wherein said phone server (24) further includes a voice mail and answering equipment for providing a message answering depending on the phone call received by said phone server.

8. Telephone system according to claim 7, wherein said phone server (24) further includes rerouting information used to reach a user who is using another telephone set than his usual one.

9. Telephone system according to any one of claims 1 to 8, wherein said telephone set (20, 22) is an intelligent telephone equipment provided with the same facilities as the facilities of said phone server (24).

10. Telephone system according to claim 9, wherein the information stored in said intelligent telephone equipment (20, 22) is updated by said phone server either on request of the telephone equipment user or on a periodic basis.
